(19) Europäisches Patentamt
European Patent Office
Office européen des brevets

(11) EP 4 317 293 A1

(12) **EUROPEAN PATENT APPLICATION**
published in accordance with Art. 153(4) EPC

(43) Date of publication:
**07.02.2024 Bulletin 2024/06**

(21) Application number: **22780392.1**

(22) Date of filing: **23.03.2022**

(51) International Patent Classification (IPC):
***C08K 7/06*** *(2006.01)* ***C08L 29/14*** *(2006.01)*
***H01M 4/62*** *(2006.01)* ***C08K 3/04*** *(2006.01)*

(52) Cooperative Patent Classification (CPC):
**C08K 3/04; C08K 7/06; C08L 29/14; H01M 4/62**

(86) International application number:
**PCT/JP2022/013574**

(87) International publication number:
**WO 2022/210177 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2021 JP 2021055599**

(71) Applicant: **SEKISUI CHEMICAL CO., LTD.**
**530-0047 (JP)**

(72) Inventors:
- **ASABA, Yutaro**
  **Koka-shi, Shiga 528-8585 (JP)**
- **SASAKI, Jun**
  **Koka-shi, Shiga 528-8585 (JP)**
- **TAKENAKA, Keisuke**
  **Koka-shi, Shiga 528-8585 (JP)**
- **SAKAMOTO, Ryou**
  **Shunan-shi, Yamaguchi 746-0006 (JP)**

(74) Representative: **Cabinet Beau de Loménie**
**158, rue de l'Université**
**75340 Paris Cedex 07 (FR)**

(54) **RESIN COMPOSITION**

(57) The present invention provides a resin composition that has excellent application properties and excellent adhesion, can achieve high electron conductivity simultaneously with the dispersibility and dispersion stability of fibrous carbon materials, and enables production of lithium secondary batteries having high capacity retention. Provided is a resin composition containing: a fibrous carbon material; a non-aqueous solvent; and a polyvinyl acetal resin, the polyvinyl acetal resin including a structural unit containing an acidic functional group, and having an average degree of polymerization of 150 or greater and 1,500 or less and a hydroxy group content of 40.0 mol% or greater and 80.0 mol% or less.



Processed by Luminess, 75001 PARIS (FR)

## Description

TECHNICAL FIELD

The present invention relates to a resin composition that has excellent application properties and excellent adhesion, can achieve high electron conductivity simultaneously with the dispersibility and dispersion stability of fibrous carbon materials, and enables production of lithium secondary batteries having high capacity retention.

BACKGROUND ART

Fibrous carbon materials such as carbon nanotubes and VGCFs exhibit excellent electrical properties. In recent years, they have been expected to be put into practical use in various fields including the electronics field. For example, research has been made on adding fibrous carbon materials as conductive aids to secondary battery electrodes or transparent electrodes.
Fibrous carbon materials are typically used in the form of a composition dispersed in water or an organic solvent.
For example, Patent Literature 1 discloses an electrically conductive resin composition that contains resin components including polyvinyl acetal (A) and a curable resin (B) and carbon components including carbon nanotubes (C) having an aspect ratio and an average fiber diameter in predetermined ranges.
Patent Literature 2 discloses a fine carbon fiber dispersion containing fine carbon fibers, a dispersion medium, a polymer dispersant, and a basic compound having a pKa of 7.5 or greater.
Patent Literature 3 discloses a composition containing polyvinyl acetal resin fine particles, a fibrous electrically conductive substance, and a liquid dispersion medium.

CITATION LIST

- Patent Literature

Patent Literature 1: JP 2014-28900 A
Patent Literature 2: JP 2014-181140 A
Patent Literature 3: JP 2014-209435 A

SUMMARY OF INVENTION

- Technical problem

However, fibrous carbon materials cannot maintain a stable dispersion state in a solvent due to their low solubility and low dispersibility. In particular, they are known to be unable to maintain a dispersed state in non-aqueous solvents. Moreover, although fibrous carbon materials have excellent electrical, thermal, and mechanical properties, they easily tangle due to their significantly high aspect ratio, making it difficult to produce a high-performance composite material that fully utilizes their properties.
Solving the above issue requires adding a resin component, which serves as a dispersant, in a large amount. However, this inhibits the properties of the fibrous carbon material. Even the compositions disclosed in Patent Literatures 1 to 3 are insufficient for the fibrous carbon materials to exhibit high dispersibility while maintaining their high electron conductivity.
The present invention aims to provide a resin composition that has excellent application properties and excellent adhesion, can achieve high electron conductivity simultaneously with the dispersibility and dispersion stability of fibrous carbon materials, and enables production of lithium secondary batteries having high capacity retention.

- Solution to problem

The present invention relates to a resin composition containing: a fibrous carbon material; a non-aqueous solvent; and a polyvinyl acetal resin, the polyvinyl acetal resin including a structural unit containing an acidic functional group, and having an average degree of polymerization of 150 or greater and 1,500 or less and a hydroxy group content of 40.0 mol% or greater and 80.0 mol% or less.
The present invention is described in detail below.
As a result of extensive studies, the present inventors have found out that the combined use of a fibrous carbon

material, a non-aqueous solvent, and a polyvinyl acetal resin having a specific structure provides excellent application properties and excellent adhesion and allows high electron conductivity to be achieved simultaneously with the dispersibility of the fibrous carbon material. Moreover, the inventors have found that the resin composition enables production of lithium secondary batteries having high capacity retention, and completed the present invention.

The resin composition of the present invention contains a fibrous carbon material.

With the fibrous carbon material contained, the electrical conduction properties can be enhanced.

The fibrous carbon material means a carbon material having an aspect ratio (average fiber length/average fiber diameter) of 30 or greater.

To efficiently form electron conduction paths, the fibrous carbon material preferably has an aspect ratio (average fiber length/average fiber diameter) of 50 or greater, more preferably 100 or greater, still more preferably 200 or greater, further preferably 400 or greater, and preferably 500,000 or less, more preferably 300,000 or less, still more preferably 100,000 or less, further preferably 50,000 or less, particularly preferably 20,000 or less.

Examples of the fibrous carbon material include carbon fibers and carbon nanotubes.

Example of the carbon fibers include PAN carbon fibers, pitch carbon fibers, cellulose carbon fibers, and vapor-grown carbon fibers (VGCFs).

The carbon nanotube is a tubular carbon material. Examples thereof include single-walled carbon nanotubes and multi-walled carbon nanotubes.

To efficiently form electron conduction paths, the fibrous carbon material preferably has an average fiber diameter of 0.40 nm or greater, more preferably 0.50 nm or greater, still more preferably 1.0 nm or greater, further preferably 5.0 nm or greater, and preferably 200.0 nm or less, more preferably 150.0 nm or less, still more preferably 100.0 nm or less.

The average fiber diameter can be measured by Raman spectroscopy (Raman), for example.

To efficiently form electron conduction paths, the fibrous carbon material preferably has an average fiber length of 0.10 um or greater, more preferably 0.50 um or greater, still more preferably 1.0 um or greater, further preferably 5.0 um or greater, and preferably 500.0 um or less, more preferably 250.0 um or less, still more preferably 200.0 um or less, further preferably 100.0 um or less.

The average fiber length can be measured by Raman spectroscopy (Raman), for example.

To maintain a stable dispersed state, the fibrous carbon material preferably has a specific gravity of 1.0 or greater, more preferably 1.3 or greater, still more preferably 1.5 or greater, further preferably 1.8 or greater, and preferably 2.5 or less, more preferably 2.3 or less, still more preferably 2.1 or less.

The specific gravity can be measured by a method in conformity with JIS Z8807.

To increase the electrical conductivity while maintaining the dispersibility, the fibrous carbon material preferably has a specific surface area of 8 $m^2/g$ or greater, more preferably 13 $m^2/g$ or greater, still more preferably 100 $m^2/g$ or greater, further preferably 200 $m^2/g$ or greater, and preferably 3,000 $m^2/g$ or less, more preferably 1,500 $m^2/g$ or less, still more preferably 1,200 $m^2/g$ or less, further preferably 1,000 $m^2/g$ or less.

The specific surface area can be measured using a specific surface area measuring device (produced by Shimadzu Corporation, "ASAP-2000"), for example.

To increase the electron conductivity, the fibrous carbon material preferably has a peak intensity ratio of G band to D band (G/D ratio) of 0.1 or greater, more preferably 5 or greater, still more preferably 10 or greater, and preferably 100 or less, more preferably 85 or less, still more preferably 70 or less.

The G/D ratio can be determined by measuring a Raman spectrum by Raman spectroscopy, for example.

In analysis of the fibrous carbon material by Raman spectroscopy, two peaks, that is, G band (at around 1,580 $cm^{-1}$) corresponding to the sp2 bonds and D band (at around 1,360 $cm^{-1}$) corresponding to the sp3 bonds, are clearly observed. In the case of a crystalline carbon material, one of the two bands is minimized. For example, in the case of monocrystalline diamond, G band at around 1,580 $cm^{-1}$ is hardly observed. In the case of a high-purity graphite structure, D band at around 1,360 $cm^{-1}$ hardly appears.

The fibrous carbon material may be discontinuous fibers obtained by intermittently cutting fibers or may be continuous fibers that are not cut.

The fibers may be in any form. The fibers may be in the form of fibers or the form of a sheet such as a woven fabric, a knitted fabric, or a non-woven fabric.

The amount of the fibrous carbon material in the resin composition of the present invention is preferably 0.05% by weight or more, more preferably 0.1% by weight or more, still more preferably 0.5% by weight or more, further preferably 1.5% by weight or more, and is preferably 15.0% by weight or less, more preferably 10.0% by weight or less.

The resin composition of the present invention contains a non-aqueous solvent.

The non-aqueous solvent means a solvent having a water content of 100 ppm by weight or less.

Examples of the non-aqueous solvent include organic solvents such as ketones, alcohols, aromatic hydrocarbons, esters, and amides.

Examples of the ketones include acetone, methyl ethyl ketone, dipropyl ketone, and diisobutyl ketone.

Examples of the alcohols include methanol, ethanol, isopropanol, and butanol.

Examples of the aromatic hydrocarbons include toluene and xylene.

Examples of the esters include methyl propionate, ethyl propionate, butyl propionate, methyl butanoate, ethyl butanoate, butyl butanoate, methyl pentanoate, ethyl pentanoate, butyl pentanoate, methyl hexanoate, ethyl hexanoate, butyl hexanoate, 2-ethylhexyl acetate, and 2-ethylhexyl butyrate.

Also usable are methyl cellosolve, ethyl cellosolve, butyl cellosolve, terpineol, dihydroterpineol, butyl cellosolve acetate, butyl carbitol acetate, terpineol acetate, and dihydroterpineol acetate.

Examples of the carbonates include propylene carbonate, ethylene carbonate, diethyl carbonate, dimethyl carbonate, and methyl ethyl carbonate.

Preferred among the amides are those having a lactam structure, more preferably a 3- to 6-membered ring lactam structure, still more preferably a 5-membered ring lactam structure. Specific examples of the amides include dimethylacetamide, N,N-dimethylformamide, N-methylpyrrolidone, and diethylformamide.

The amount of the non-aqueous solvent in the resin composition of the present invention is preferably 60.0% by weight or more, more preferably 70.0% by weight or more, and is preferably 99.9% by weight or less.

The resin composition of the present invention contains a polyvinyl acetal resin.

The polyvinyl acetal resin includes a structural unit containing an acidic functional group and has an average degree of polymerization of 150 or greater and 1,500 or less and a hydroxy group content of 40.0 mol% or greater and 80.0 mol% or less.

With the polyvinyl acetal resin contained, the dispersibility of the fibrous carbon material can be sufficiently enhanced even when the polyvinyl acetal resin serving as a dispersant is added in a smaller amount. High electron conductivity thus can be achieved simultaneously with the dispersibility of the fibrous carbon material.

The polyvinyl acetal resin includes a structural unit containing an acidic functional group.

The acidic functional group is preferably a Bronsted acidic group.

Examples of the Bronsted acidic group include a carboxylic acid group, a sulfonic acid group, a phosphoric acid group, a sulfinic acid group, a sulfenic acid, a phosphonic acid group, and salts thereof.

In particular, the Bronsted acidic group is preferably at least one selected from the group consisting of a carboxylic acid group, a sulfonic acid group, and a phosphoric acid group.

The modified polyvinyl acetal resin including the structural unit containing an acidic functional group can enhance the dispersibility of the fibrous carbon material even when the polyvinyl acetal resin is added in a small amount.

The structural unit containing an acidic functional group may have a structure in which an acidic functional group as a side chain is directly bonded to a carbon atom constituting the main chain or a structure in which an acidic functional group is bonded to a carbon atom constituting the main chain via an alkylene group. The structural unit containing an acidic functional group may have a structure in which an acidic functional group is bonded to a carbon atom constituting the main chain via an acetal bond.

The structural unit containing an acidic functional group may have a steric structure in which two acidic functional groups are bonded to the same carbon atom constituting the main chain or a steric structure in which one acidic functional group is bonded to a carbon atom constituting the main chain. Alternatively, the structural unit containing an acidic functional group may have a steric structure in which one acidic functional group is bonded to each of two adjacent carbon atoms constituting the main chain or a steric structure in which an acidic functional group is bonded to only one of two adjacent carbon atoms constituting the main chain. A preferred structure is a steric structure in which two acidic functional groups are bonded to the same carbon atom constituting the main chain or a steric structure in which one acidic functional group is bonded to each of two adjacent carbon atoms constituting the main chain. A more preferred structure is a steric structure in which two acidic functional groups are bonded to the same carbon atom constituting the main chain, because such a structure increases the steric hindrance and thereby widens the network structure of a cured product obtainable by combining the polyvinyl acetal resin and an epoxy resin, and as a result can enhance the flexibility of the cured product to be obtained.

The structural unit containing an acidic functional group may have a steric structure in which acidic functional groups are bonded to carbon atoms constituting the main chain on one side of the chain (isotactic arrangement) or a steric structure in which acidic functional groups are bonded to carbon atoms constituting the main chain on alternate sides of the chain (syndiotactic arrangement). The structural unit may have a steric structure in which the acidic functional groups are randomly bonded (atactic arrangement).

In the case where the structural unit containing an acidic functional group has a structure in which an acidic functional group is bonded to a carbon atom constituting the main chain via an alkylene group, the alkylene group is preferably a C1-C10 alkylene group, more preferably a C1-C5 alkylene group, still more preferably a C1-C3 alkylene group.

Examples of the C1-C10 alkylene group include linear alkylene groups, branched alkylene groups, and cyclic alkylene groups.

Examples of the linear alkylene groups include methylene, vinylene, n-propylene, tetramethylene, pentamethylene, hexamethylene, octamethylene, and decamethylene groups.

Examples of the branched alkylene groups include methyl methylene, methyl ethylene, 1-methyl pentylene, and 1,4-dimethyl butylene groups.

Examples of the cyclic alkylene groups include cyclopropylene, cyclobutylene, and cyclohexylene groups. Preferred among these are linear alkylene groups, more preferred are methylene, vinylene, and n-propylene groups, and still more preferred are methylene and vinylene groups.

Examples of the structural unit containing an acidic functional group include structural units represented by the following formulas (1-1) to (1-5).

[Chem. 1]

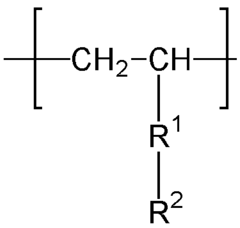
(1－1)

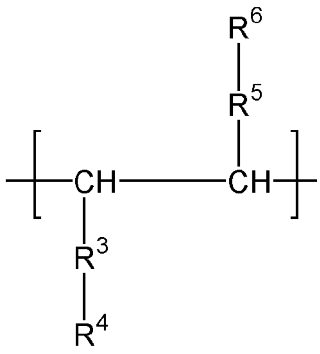
(1－2)

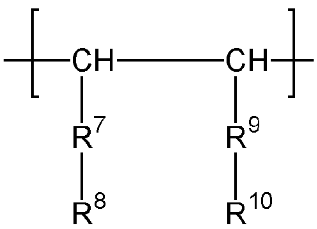
(1－3)

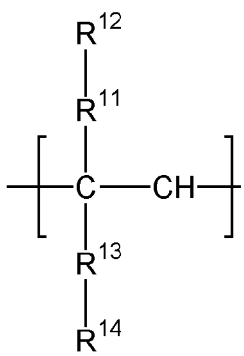
(1－4)

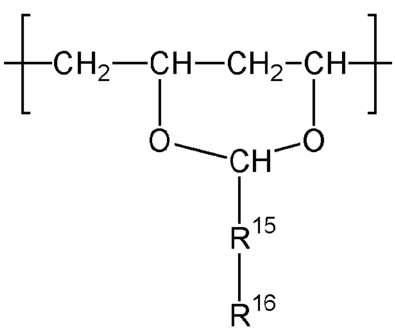
(1－5)

In the formulas (1-1) to (1-5), $R^1$, $R^3$, $R^5$, $R^7$, $R^9$, $R^{11}$, $R^{13}$, and $R^{15}$ each independently represent a single bond or a C1-C10 alkylene group; and $R^2$, $R^4$, $R^6$, $R^8$, $R^{10}$, $R^{12}$, $R^{14}$, and $R^{16}$ represent acidic functional groups.

$R^1$, $R^3$, $R^5$, $R^7$, $R^9$, $R^{11}$, $R^{13}$, and $R^{15}$ are each preferably a single bond or a C1-C5 alkylene group, more

preferably a single bond or a C1-C3 alkylene group.

Examples of the C1-C10 alkylene group include linear alkylene groups, branched alkylene groups, and cyclic alkylene groups.

Examples of the linear alkylene groups include methylene, vinylene, n-propylene, tetramethylene, pentamethylene, hexamethylene, octamethylene, and decamethylene groups.

Examples of the branched alkylene groups include methyl methylene, methyl ethylene, 1-methyl pentylene, and 1,4-dimethyl butylene groups.

Examples of the cyclic alkylene groups include cyclopropylene, cyclobutylene, and cyclohexylene groups. Preferred among these are linear alkylene groups, more preferred are methylene, vinylene, and n-propylene groups, and still more preferred are methylene and vinylene groups.

When the acidic functional group is a carboxylic acid group, examples of a structural unit containing a carboxy group include a structural unit represented by the following formula (2-1), a structural unit represented by the following formula (2-2), a structural unit represented by the following formula (2-3), and a structural unit represented by the following formula (2-4).

[Chem. 2]

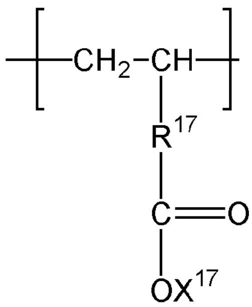
(2－1)

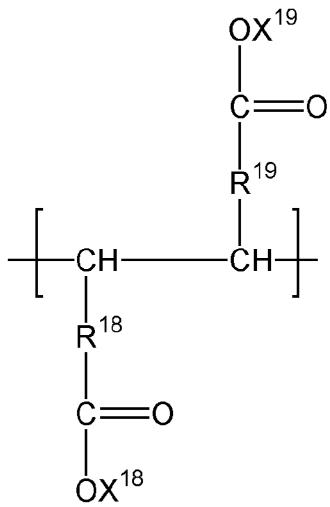
(2－2)

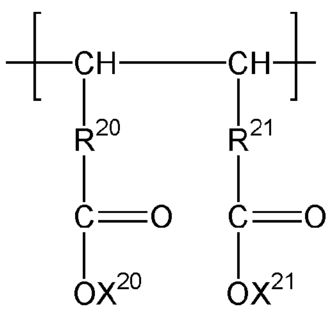
(2－3)

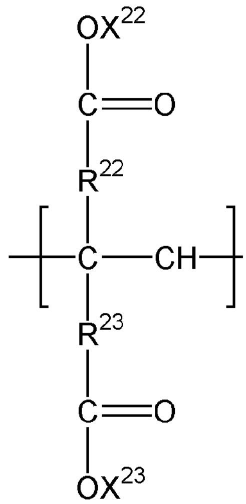
(2－4)

In the formulas (2-1) to (2-4), $R^{17}$ to $R^{23}$ each independently represent a single bond or a C1-C10 alkylene group; and $X^{17}$ to $X^{23}$ each independently represent a hydrogen atom, a metal atom, or a methyl group.

Examples of the C1-C10 alkylene group include those mentioned for $R^1$ in the formula (1-1).

Examples of the metal atom include sodium, lithium, and potassium atoms. A sodium atom is preferred among these.

Examples of a structural unit containing the sulfonic acid group include a structural unit represented by the following formula (3).

[Chem. 3]

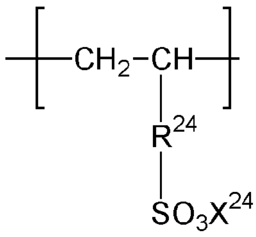

(3)

In the formula (3), $R^{24}$ represents a single bond or a C1-C10 alkylene group; and $X^{24}$ represents a hydrogen atom, a metal atom, or a methyl group.

Examples of the C1-C10 alkylene group include those mentioned for $R^1$ in the formula (1-1).

Examples of the metal atom include those mentioned for $X^{17}$ in the formula (2-1).

Example of a structural unit containing the phosphoric acid group include a structural unit represented by the following formula (4).

[Chem. 4]

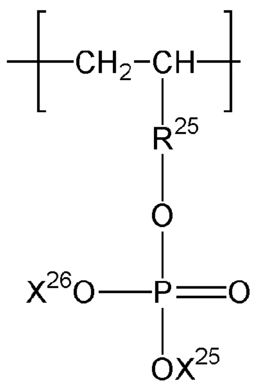

(4)

In the formula (4), $R^{25}$ represents a single bond or a C1-C10 alkylene group; and $X^{25}$ and $X^{26}$ each independently represent a hydrogen atom, a metal atom, or a methyl group.

Examples of the C1-C10 alkylene group include those mentioned for $R^1$ in the formula (1-1).

Examples of the metal atom include those mentioned for $X^{17}$ in the formula (2-1).

The amount of the structural unit containing an acidic functional group is preferably 0.01 mol% or greater and 20.0 mol% or less relative to all structural units of the polyvinyl acetal resin.

When the amount is within the range, the dispersibility of the fibrous carbon material can be more enhanced.

The amount of the structural unit containing an acidic functional group is more preferably 0.1 mol% or greater, still more preferably 0.5 mol% or greater, further preferably 1.0 mol% or greater, and is more preferably 15.0 mol% or less, still more preferably 12.0 mol% or less, further preferably 10.0 mol% or less.

The amount of the structural unit containing an acidic functional group can be measured by NMR, for example.

The polyvinyl acetal resin preferably has a Bronsted acid content of 0.1 mg/g or greater and 200 mg/g or less.

When the Bronsted acid content is within the range, the dispersibility of the fibrous carbon material can be more enhanced.

The Bronsted acid content is more preferably 0.2 mg/g or greater and 175 mg/g or less.

The Bronsted acid content means the amount of potassium hydroxide necessary to neutralize the Bronsted acid contained in the polyvinyl acetal resin.

The Bronsted acid content can be measured by acid-base titration using a method in conformity with JIS K0070-1992.

The polyvinyl acetal resin preferably includes an acetal group-containing structural unit represented by the following formula (5-1), a hydroxy group-containing structural unit represented by the following formula (5-2), and an acetyl group-containing structural unit represented by the following formula (5-3).

[Chem. 5]

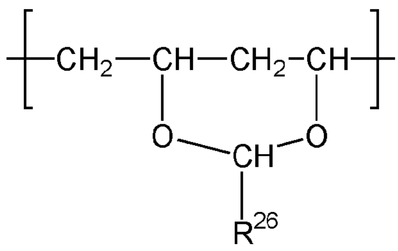

(5－1)

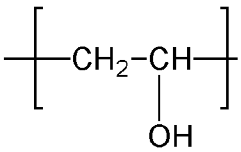

(5－2)

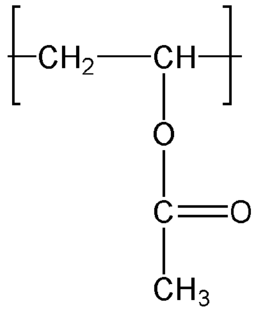

(5－3)

In the formula (5-1), $R^{26}$ represents a hydrogen atom or a C1-C20 alkyl group. The alkyl group preferably has a carbon number of 1 or greater and preferably 10 or less, more preferably 5 or less.

When $R^{26}$ in the formula (5-1) is a C1-C20 alkyl group, examples of the alkyl group include methyl, ethyl, n-propyl, isopropyl, n-butyl, iso-butyl, sec-butyl, tert-butyl, pentyl, hexyl, heptyl, 2-ethylhexyl, octyl, nonyl, decyl, undecyl, dodecyl, tridecyl, tetradecyl, pentadecyl, and octadecyl groups. Preferred among these are methyl and n-propyl groups.

In the polyvinyl acetal resin, the amount of the acetal group-containing structural unit represented by the formula (5-1) (hereinafter also referred to as an "acetal group content") is preferably 5.0 mol% or greater and 60.0 mol% or less.

When the acetal group content is within the range, the dispersibility of the fibrous carbon material can be more enhanced.

The acetal group content is more preferably 7.0 mol% or greater, still more preferably 10.0 mol% or greater, further preferably 15.0 mol% or greater, and is more preferably 50.0 mol% or less, still more preferably 40.0 mol% or less, further preferably 35.0 mol% or less.

The acetal group content herein is calculated by counting acetalized two hydroxy groups because an acetal group of a polyvinyl acetal resin is obtained by acetalizing two hydroxy groups.

The acetal group content can be measured by NMR, for example.

When the polyvinyl acetal resin includes the structural unit with an acidic functional group-containing acetal group represented by the formula (1-5) as a structural unit containing an acidic functional group, the total amount of the acidic functional group-containing structural unit represented by the formula (1-5) and the amount of the acetal group-containing structural unit represented by the formula (5-1) in the polyvinyl acetal resin (hereinafter the total amount is also referred to as a "total acetal group content") is preferably 15.0 mol% or greater, more preferably 20.0 mol% or greater, and is preferably 60.0 mol% or less, more preferably 50.0 mol% or less.

In the polyvinyl acetal resin, the amount of the hydroxy group-containing structural unit represented by the formula (5-2) (hereinafter also referred to as a "hydroxy group content") is 40.0 mol% or greater and 80.0 mol% or less.

When the hydroxy group content is within the range, the fibrous carbon material can have sufficiently enhanced dispersibility and dispersion stability while exhibiting high electron conductivity.

The hydroxy group content is preferably 45.0 mol% or greater, more preferably 50.0 mol% or greater, still more preferably 55.0 mol% or greater, and is preferably 75.0 mol% or less, more preferably 70.0 mol% or less, still more preferably 65.0 mol% or less.

The hydroxy group content can be measured by NMR, for example.

In the polyvinyl acetal resin, the amount of the acetyl group-containing structural unit represented by the formula (5-3) (hereinafter also referred to as an "acetyl group content") is preferably 0.1 mol% or greater, more preferably 1.0 mol% or greater, still more preferably 2.0 mol% or greater, further preferably 5.0 mol% or greater, and is preferably 20.0 mol% or less, more preferably 15.0 mol% or less, still more preferably 12.0 mol% or less, further preferably 8.0 mol% or less.

When the acetyl group content is within the range, an increase in viscosity is reduced, leading to higher application properties.

The acetyl group content can be measured by NMR, for example.

The polyvinyl acetal resin has an average degree of polymerization of 150 or greater and 1,500 or less.

When the average degree of polymerization is within the range, the fibrous carbon material can have sufficiently enhanced dispersibility while exhibiting high electron conductivity.

The average degree of polymerization is preferably 200 or greater and 1,000 or less.

The average degree of polymerization can be measured by gel permeation chromatography (GPC), for example.

To achieve the dispersibility and the adhesion simultaneously, the polyvinyl acetal resin preferably has a glass transition temperature of 60°C or higher, more preferably 65°C or higher, and preferably 115°C or lower, more preferably 100°C or lower.

The glass transition temperature can be measured by differential scanning calorimetry, for example.

The amount of the polyvinyl acetal resin in the resin composition of the present invention is preferably 0.1% by weight or more, more preferably 0.5% by weight or more, and is preferably 30.0% by weight or less, more preferably 15.0% by weight or less.

In the resin composition of the present invention, the ratio of the amount of the polyvinyl acetal resin to the amount of the fibrous carbon material (amount of polyvinyl acetal resin/amount of fibrous carbon material) is preferably 0.1 or greater and 2.0 or less.

When the ratio is within the range, the fibrous carbon material can have good dispersibility and easily form conduction paths. This results in higher electron conductivity.

The ratio of the amounts is more preferably 0.2 or greater and 1.5 or less.

The polyvinyl acetal resin may be produced by, for example, a method including polymerizing a monomer such as vinyl acetate to prepare a polyvinyl acetate resin, saponifying the polyvinyl acetate resin by adding an acid or alkali, subjecting the resulting polyvinyl alcohol resin to purifying or the like to adjust its Na ion content, and acetalizing the polyvinyl alcohol resin.

The polyvinyl alcohol resin may be, for example, a conventionally known polyvinyl alcohol resin such as a resin produced by saponifying a polyvinyl acetate resin with an alkali, an acid, aqueous ammonia, or the like.

The polyvinyl alcohol resin may be completely saponified, but is not necessarily completely saponified and may be a partially saponified polyvinyl alcohol resin as long as the polyvinyl alcohol resin has at least one unit having a hydroxyl group diad for a meso or a racemo position in at least one position of the main chain. Examples of other polyvinyl alcohol resins that can be used include copolymers of vinyl alcohol and a monomer copolymerizable with vinyl alcohol, such as ethylene-vinyl alcohol copolymer resins and partially saponified ethylene-vinyl alcohol copolymer resins.

Examples of the polyvinyl acetate resin include ethylene-vinyl acetate copolymers.

The polyvinyl acetal resin including the structural unit containing an acidic functional group may be produced by, for example, preparing polyvinyl alcohol by saponifying polyvinyl acetate obtained by copolymerizing a monomer having an acidic functional group and vinyl acetate, and acetalizing the obtained polyvinyl alcohol by a conventionally known method. Alternatively, the polyvinyl acetal resin may be obtained by acetalizing unmodified polyvinyl alcohol by a conventionally known method and post-modifying the resulting polyvinyl acetal resin to introduce an acidic functional group thereto.

Examples of the monomer having an acidic functional group include monocarboxylic acids such as acrylic acid, crotonic acid, methacrylic acid, and oleic acid, dicarboxylic acids such as methylene malonic acid, itaconic acid, 2-methylene glutaric acid, 2-methylene adipic acid, and 2-methylene sebacic acid, maleic anhydride, and metal salts of these.

The polyvinyl alcohol resin preferably has a degree of saponification of 80.0 mol% or greater and 99.9 mol% or less, more preferably 85.0 mol% or greater and 95.0 mol% or less.

Using the polyvinyl alcohol resin can further increase the dispersibility of the fibrous carbon material.

The acetalization may be carried out by a known method and is preferably carried out in a water-based solvent, a solvent mixture containing water and an organic solvent compatible with water, or an organic solvent.

The organic solvent compatible with water may be, for example, an alcoholic organic solvent.

Examples of the organic solvent include alcoholic organic solvents, aromatic organic solvents, aliphatic ester solvents, ketone solvents, lower paraffin solvents, ether solvents, amide solvents, and amine solvents.

Examples of the alcoholic organic solvents include methanol, ethanol, n-propanol, isopropanol, n-butanol, and tert-butanol.

Examples of the aromatic organic solvents include xylene, toluene, ethyl benzene, and methyl benzoate.

Examples of the aliphatic ester solvents include methyl acetate, ethyl acetate, butyl acetate, methyl propionate, ethyl propionate, methyl butyrate, ethyl butyrate, methyl acetoacetate, and ethyl acetoacetate.

Examples of the ketone solvents include acetone, methyl ethyl ketone, methyl isobutyl ketone, cyclohexanone, methyl cyclohexanone, benzophenone, and acetophenone.

Examples of the lower paraffin solvents include hexane, pentane, octane, cyclohexane, and decane.

Examples of the ether solvents include diethyl ether, tetrahydrofuran, ethylene glycol dimethyl ether, ethylene

glycol diethyl ether, and propylene glycol diethyl ether.

Examples of the amide solvents include N,N-dimethylformamide, N,N-dimethylacetamide, N-methylpyrrolidone, and acetanilide.

Examples of the amine solvents include ammonia, trimethylamine, triethylamine, n-butylamine, di-n-butylamine, tri-n-butylamine, aniline, N-methylaniline, N,N-dimethylaniline, and pyridine.

These may be used alone or in admixture of two or more thereof. From the standpoint of the ability to dissolve resin and easy purification, particularly preferred among these are ethanol, n-propanol, isopropanol, and tetrahydrofuran.

The acetalization is preferably carried out in the presence of an acid catalyst.

The acid catalyst is not limited, and examples thereof include mineral acids such as sulfuric acid, hydrochloric acid, nitric acid, and phosphoric acid, carboxylic acids such as formic acid, acetic acid, and propionic acid, and sulfonic acids such as methanesulfonic acid, ethanesulfonic acid, benzenesulfonic acid, and p-toluenesulfonic acid. Each of these acid catalysts may be used alone, or two or more compounds may be used in combination. Preferred among these are hydrochloric acid, nitric acid, and sulfuric acid, and particularly preferred is hydrochloric acid.

The aldehyde used for the acetalization may be an aldehyde having a C1-C10 chain aliphatic group, a C1-C10 cyclic aliphatic group, or a C1-C10 aromatic group. The aldehyde used may be a conventionally known aldehyde. The aldehyde used for the acetalization reaction is not limited, and examples thereof include aliphatic aldehydes and aromatic aldehydes.

Examples of the aliphatic aldehydes include formaldehyde, acetaldehyde, propionaldehyde, n-butyraldehyde, isobutyraldehyde, n-valeraldehyde, n-hexylaldehyde, 2-ethylbutyraldehyde, 2-ethylhexylaldehyde, n-heptylaldehyde, n-octylaldehyde, n-nonylaldehyde, n-decylaldehyde, and amylaldehyde.

Examples of the aromatic aldehydes include aromatic aldehydes such as benzaldehyde, cinnamaldehyde, 2-methylbenzaldehyde, 3-methylbenzaldehyde, 4-methylbenzaldehyde, p-hydroxybenzaldehyde, m-hydroxybenzaldehyde, phenylacetaldehyde, and β-phenylpropionaldehyde.

Cyclic multimers such as paraldehyde and metaldehyde may also be used.

Each of these aldehydes may be used alone, or two or more thereof may be used in combination. Preferred among these aldehydes are formaldehyde, acetaldehyde, butyraldehyde, 2-ethylhexylaldehyde, n-nonylaldehyde, and paraldehyde because they have excellent acetalization reactivity and can give a sufficient internal plasticization effect and in turn favorable flexibility to the resulting resin. More preferred are formaldehyde, acetaldehyde, butyraldehyde, and paraldehyde because a resin composition particularly excellent in impact resistance and adhesion to metal can be obtained.

The amount of the aldehyde to be added can be appropriately determined according to the acetal group content of the aimed polyvinyl acetal resin. In particular, the amount may be 10 to 65 mol%, preferably 15 to 60 mol% relative to 100 mol% of the polyvinyl alcohol. The amount in the range is preferred because the acetalization reaction can be efficiently carried out and unreacted aldehyde can be easily removed.

The resin composition of the present invention may further contain additives such as other binders (e.g., polyvinylidene fluoride), conductive aids, flame retardant auxiliaries, defoamers, leveling agents, and tackifiers as long as the effects of the present invention are not impaired.

The resin composition of the present invention preferably does not contain a curable resin.

The method for producing the resin composition of the present invention is not limited. For example, a polyvinyl acetal resin obtained by acetalizing raw material polyvinyl alcohol and a fibrous carbon material are added to a non-aqueous solvent and mixed.

The mixing may be performed using any of various mixers such as a ball mill, a blender mill, and a triple roll mill.

A composition for a lithium secondary battery electrode can be obtained by adding an active material to the resin composition of the present invention.

Examples of the active material include a positive electrode active material and a negative electrode active material.

Examples of the positive electrode active material include particles of oxides containing lithium and a transition metal element as constituent metal elements (lithium transition metal oxides), such as lithium nickel oxides (e.g., $LiNiO_2$), lithium cobalt oxides (e.g., $LiCoO_2$), lithium manganese oxides (e.g., $LiMn_2O_4$), and composites thereof (e.g., $LiNi_{0.5}Mn_{1.5}O_q$, $LiNi_{1/3}Co_{1/3}Mn_{1/3}O_2$). Examples of the positive electrode active material also include particles of phosphates containing lithium and a transition metal element as constituent metal elements, such as lithium manganese phosphate ($LiMnPO_4$) and lithium iron phosphate ($LiFePO_4$).

Each of these may be used alone, or two or more of these may be used in combination.

Examples of the negative electrode active material include materials conventionally used as negative electrode active materials for lithium secondary batteries. Examples of such materials include carbon materials such as graphite, natural graphite, graphite carbon, and amorphous carbon, lithium transition metal oxides, lithium transition metal nitrides, silicon, and silicon compounds such as silicon oxide.

The method for producing the composition for a lithium secondary battery electrode is not limited. For example,

the active material, the resin composition of the present invention, and optional additives are mixed with any of various mixers such as a ball mill, a blender mill, and a triple roll mill.

The composition for a lithium secondary battery electrode may be, for example, applied to an electrically conductive substrate and dried to form a lithium secondary battery electrode.

The application method may be any of various application methods such as an extrusion coater, a reverse roller, a doctor blade, and an applicator.

- Advantageous Effects of Invention

The present invention can provide a resin composition that has excellent application properties and excellent adhesion, can achieve high electron conductivity simultaneously with the dispersibility and dispersion stability of fibrous carbon materials, and enables production of lithium secondary batteries having high capacity retention.

DESCRIPTION OF EMBODIMENTS

The present invention is more specifically described in the following with reference to, but not limited to, examples.

(Production Example 1)

An amount of 500 g of a carboxylic acid-modified polyvinyl alcohol resin (average degree of polymerization 150, degree of saponification 98 mol%, the amount of a structural unit represented by the formula (2-1) ($R^{17}$ is a methylene group and $X^{17}$ is a hydrogen atom) 0.01 mol%) was added to 2,500 g of pure water and stirred at 90°C for two hours for dissolution. This solution was cooled to 40°C, and to the solution was added 10 g of hydrochloric acid having a concentration of 35% by weight. The solution temperature was cooled to 5°C and 62.99 g of acetaldehyde was added. This temperature was maintained and acetalization reaction was performed to precipitate out a reaction product. The solution was maintained at a solution temperature of 65°C for five hours to complete the reaction, and 40 g of an aqueous sodium hydroxide solution was added for neutralization reaction. Then, 5,000 g of pure water was added, stirred, and then 5,000 g of water was removed by decantation. Further, the step of adding 5,000 g of pure water, stirring, and removing water by decantation was repeated three times in total. The solid content of the resin was then adjusted to 20% by weight using ion-exchanged water, whereby a polyvinyl acetal resin A1 was obtained.

The obtained polyvinyl acetal resin was analyzed by $^1$H-NMR (nuclear magnetic resonance spectroscopy) to measure the acetal group content, the hydroxy group content, and the acetyl group content. Table 1 shows the results. $^1$H-NMR measurement was performed using deuterated DMSO as a solvent.

The Bronsted acid content was measured by acid-base titration in conformity with JIS K0070-1992. Specifically, it was measured by following method. First, a main test was performed as follows. About 1 g of the obtained polyvinyl acetal resin as a sample was precisely weighed into a conical flask, and 40 ml of an ethanol/water (volume ratio 9:1) solvent mixture was added thereto, followed by shaking for dissolution. After dissolution, with a 1% by weight phenolphthalein solution as an indicator, the sample was titrated using a 0.02 mol/L potassium hydroxide ethanolic solution with a microburet until a point at which a faint pink color lasted for at least 30 seconds. Separately, a blank test was performed, and the Bronsted acid content was determined by the following formula. The result was 0.2 mg/g.

$$\text{Brønsted acid content} = [(A - B) \times f \times (1/50) \times (C/1{,}000)] \times 100/D$$

A: The amount (mL) of the potassium hydroxide ethanolic solution dropped in the main test
B: The amount (mL) of the potassium hydroxide ethanolic solution dropped in the blank test
C: The molecular weight of a structural unit containing an acidic functional group
D: The amount (g) of the sample
f: The titer of the 0.02 mol/L potassium hydroxide ethanolic solution

The glass transition temperature (Tg) of the obtained polyvinyl acetal resin was measured using a differential scanning calorimeter (DSC) at a temperature increase rate of 10°C/min. The result was 93°C.

(Production Example 2)

A polyvinyl acetal resin A2 was obtained as in Production Example 1 except that a sulfonic acid-modified

polyvinyl alcohol resin (average degree of polymerization 500, degree of saponification 98 mol%, the amount of a structural unit represented by the formula (3) ($R^{24}$ is a methylene group and $X^{24}$ is a hydrogen atom) 1.0 mol%) was used and the amount of acetaldehyde added was 32.99 g.

(Production Example 3)

A polyvinyl acetal resin A3 was obtained as in Production Example 1 except that a phosphoric acid-modified polyvinyl alcohol resin (average degree of polymerization 1,000, degree of saponification 92 mol%, the amount of a structural unit represented by the formula (4) ($R^{25}$ is a methylene group, and $X^{25}$ and $X^{26}$ are each a hydrogen atom) 10.0 mol%) was used and the amount of acetaldehyde added was 46.99 g.

(Production Example 4)

A polyvinyl acetal resin A4 was obtained as in Production Example 1 except that a phosphoric acid-modified polyvinyl alcohol resin (average degree of polymerization 1,250, degree of saponification 98 mol%, the amount of a structural unit represented by the formula (4) ($R^{25}$ is a vinylene group, and $X^{25}$ and $X^{26}$ are each a hydrogen atom) 0.1 mol%) was used and the amount of acetaldehyde added was 22.9 g.

(Production Example 5)

A polyvinyl acetal resin A5 was obtained as in Production Example 1 except that a sulfonic acid-modified polyvinyl alcohol resin (average degree of polymerization 1,500, degree of saponification 98 mol%, the amount of a structural unit represented by the formula (3) ($R^{24}$ is a methylene group and $X^{24}$ is a sodium element) 10.0 mol%) was used and the amount of acetaldehyde added was 53 g.

(Production Example 6)

An amount of 250 g of a carboxylic acid-modified polyvinyl alcohol resin (average degree of polymerization 500, degree of saponification 98 mol%, the amount of a structural unit represented by the formula (2-1) ($R^{17}$ is a methylene group and $X^{17}$ is a hydrogen atom) 1.0 mol%) and 250 g of an unmodified polyvinyl alcohol resin (average degree of polymerization 500, degree of saponification 98 mol%) were used. The amount of acetaldehyde added was 52 g. Except for these changes, a polyvinyl acetal resin A6 was obtained as in Production Example 1.

(Production Example 7)

An amount of 250 g of a carboxylic acid-modified polyvinyl alcohol resin (average degree of polymerization 1,000, degree of saponification 92 mol%, the amount of a structural unit represented by the formula (2-1) ($R^{17}$ is a methylene group and $X^{17}$ is a hydrogen atom) 0.1 mol%) and a 250 g of a sulfonic acid-modified polyvinyl alcohol resin (average degree of polymerization 1,000, degree of saponification 92 mol%, the amount of a structural unit represented by the formula (3) ($R^{24}$ is a vinylene group and $X^{24}$ is a hydrogen atom) 0.1 mol%) were used. The amount of acetaldehyde added was 26.9 g. Except for these changes, a polyvinyl acetal resin A7 was obtained as in Production Example 1.

(Production Example 8)

An amount of 250 g of a carboxylic acid-modified polyvinyl alcohol resin (average degree of polymerization 1,250, degree of saponification 98 mol%, the amount of a structural unit represented by the formula (2-1) ($R^{17}$ is a methylene group and $X^{17}$ is a hydrogen atom) 0.01 mol%) and 250 g of a phosphoric acid-modified polyvinyl alcohol resin (average degree of polymerization 1,250, degree of saponification 98 mol%, the amount of a structural unit represented by the formula (4) ($R^{25}$ is a methylene group, and $X^{25}$ and $X^{26}$ are each a sodium atom) 0.1 mol%) were used. The amount of acetaldehyde added was 42.89 g. Except for these changes, a polyvinyl acetal resin A8 was obtained as in Production Example 1.

(Production Example 9)

A polyvinyl acetal resin A9 was obtained as in Production Example 1 except that a carboxylic acid-modified polyvinyl alcohol resin (average degree of polymerization 1,250, degree of saponification 98 mol%, the amount of a structural unit represented by the formula (2-1) ($R^{17}$ is a methylene group and $X^{17}$ is a hydrogen atom) 15.0 mol%) was used and the amount of acetaldehyde added was 38 g.

(Production Example 10)

A polyvinyl acetal resin B1 was obtained as in Production Example 1 except that a carboxylic acid-modified polyvinyl alcohol resin (average degree of polymerization 100, degree of saponification 98 mol%, the amount of a structural unit represented by the formula (2-1) ($R^{17}$ is a methylene group and $X^{17}$ is a hydrogen atom) 0.1 mol%) was used and the amount of acetaldehyde added was 57.9 g.

(Production Example 11)

A polyvinyl acetal resin B2 was obtained as in Production Example 1 except that a sulfonic acid-modified polyvinyl alcohol resin (average degree of polymerization 1,700, degree of saponification 98 mol%, the amount of a structural unit represented by the formula (3) ($R^{24}$ is a methylene group and $X^{24}$ is a hydrogen atom) 10.0 mol%) was used and the amount of acetaldehyde added was 53 g.

(Production Example 12)

A polyvinyl acetal resin B3 was obtained as in Production Example 1 except that a phosphoric acid-modified polyvinyl alcohol resin (average degree of polymerization 500, degree of saponification 98 mol%, the amount of a structural unit represented by the formula (4) ($R^{25}$ is a vinylene group, and $X^{25}$ and $X^{26}$ are each a hydrogen atom) 1.0 mol%) was used and the amount of acetaldehyde added was 67 g.

(Production Example 13)

A polyvinyl acetal resin B4 was obtained as in Production Example 1 except that a carboxylic acid-modified polyvinyl alcohol resin (average degree of polymerization 1,250, degree of saponification 98 mol%, the amount of a structural unit represented by the formula (2-1) ($R^{17}$ is a methylene group and $X^{17}$ is a hydrogen atom) 0.01 mol%) was used and the amount of acetaldehyde added was 17.99 g.

(Production Example 14)

A polyvinyl acetal resin B5 was obtained as in Production Example 1 except that an unmodified polyvinyl alcohol resin (average degree of polymerization 500, degree of saponification 92 mol%) was used and the amount of acetaldehyde added was 37 g.

(Production Example 15)

A polyvinyl acetal resin B6 was obtained as in Production Example 1 except that a carboxylic acid-modified polyvinyl alcohol resin (average degree of polymerization 1,700, degree of saponification 98 mol%, the amount of a structural unit represented by the formula (2-1) ($R^{17}$ is a methylene group and $X^{17}$ is a hydrogen atom) 0.01 mol%) was used.

(Production Example 16)

A polyvinyl acetal resin B7 was obtained as in Production Example 1 except that a carboxylic acid-modified polyvinyl alcohol resin (average degree of polymerization 150, degree of saponification 98 mol%, the amount of a structural unit represented by the formula (2-1) ($R^{17}$ is a methylene group and $X^{17}$ is a hydrogen atom) 0.01 mol%) was used and the amount of acetaldehyde added was 73.0 g.

(Production Example 17)

A polyvinyl acetal resin A10 was obtained as in Production Example 1 except that a sulfonic acid-modified polyvinyl alcohol resin (average degree of polymerization 500, degree of saponification 98 mol%, the amount of a structural unit represented by the formula (3) ($R^{24}$ is a methylene group and $X^{24}$ is a hydrogen atom) 1.0 mol%) was used and 62 g of butyraldehyde was added instead of acetaldehyde.

(Production Example 18)

A polyvinyl acetal resin A11 was obtained as in Production Example 1 except that a carboxylic acid-modified

polyvinyl alcohol resin (average degree of polymerization 150, degree of saponification 98 mol%, the amount of a structural unit represented by the formula (2-1) ($R^{17}$ is a methylene group and $X^{17}$ is a hydrogen atom) 0.1 mol%) was used and 62 g of butyraldehyde was added instead of acetaldehyde.

(Production Example 19)

A polyvinyl acetal resin A12 was obtained as in Production Example 1 except that a carboxylic acid-modified polyvinyl alcohol resin (average degree of polymerization 500, degree of saponification 98 mol%, the amount of a structural unit represented by the formula (2-1) ($R^{17}$ is a methylene group and $X^{17}$ is a hydrogen atom) 0.1 mol%) and 52.9 g of hexylaldehyde was added instead of acetaldehyde.

(Production Example 20)

A polyvinyl acetal resin A13 was obtained as in Production Example 1 except that a carboxylic acid-modified polyvinyl alcohol resin (average degree of polymerization 500, degree of saponification 98 mol%, the amount of a structural unit represented by the formula (2-1) ($R^{17}$ is a methylene group and $X^{17}$ is a hydrogen atom) 0.005 mol%) was used and 63.0 g of butyraldehyde was added instead of acetaldehyde.

(Production Example 21)

A polyvinyl acetal resin A14 was obtained as in Production Example 1 except that a carboxylic acid-modified polyvinyl alcohol resin (average degree of polymerization 500, degree of saponification 98 mol%, the amount of a structural unit represented by the formula (2-1) ($R^{17}$ is a methylene group and $X^{17}$ is a hydrogen atom) 0.001 mol%) was used and 63.0 g of butyraldehyde was added instead of acetaldehyde.

(Production Example 22)

A polyvinyl acetal resin A15 was obtained as in Production Example 1 except that a carboxylic acid-modified polyvinyl alcohol resin (average degree of polymerization 500, degree of saponification 98 mol%, the amount of a structural unit represented by the formula (2-1) ($R^{17}$ is a methylene group and $X^{17}$ is a hydrogen atom) 14.5 mol%) was used and 48.5 g of butyraldehyde was added instead of acetaldehyde.

(Production Example 23)

A polyvinyl acetal resin A16 was obtained as in Production Example 1 except that a phosphoric acid-modified polyvinyl alcohol resin (average degree of polymerization 500, degree of saponification 98 mol%, the amount of a structural unit represented by the formula (4) ($R^{25}$ is a methylene group, and $X^{25}$ and $X^{26}$ are each a hydrogen atom) 1.0 mol%) was used and 62.0 g of butyraldehyde was added instead of acetaldehyde.

(Production Example 24)

A polyvinyl acetal resin B8 was obtained as in Production Example 1 except that an unmodified polyvinyl alcohol resin (average degree of polymerization 150, degree of saponification 98 mol%) was used and 63.0 g of butyraldehyde was added instead of acetaldehyde.

(Production Example 25)

A polyvinyl acetal resin B9 was obtained as in Production Example 1 except that a carboxylic acid-modified polyvinyl alcohol resin (average degree of polymerization 150, degree of saponification 98 mol%, the amount of a structural unit represented by the formula (2-1) ($R^{17}$ is a methylene group and $X^{17}$ is a hydrogen atom) 0.01 mol%) was used and 17.99 g of butyraldehyde was added instead of acetaldehyde.

(Production Example 26)

A polyvinyl acetal resin B10 was obtained as in Production Example 1 except that a carboxylic acid-modified polyvinyl alcohol resin (average degree of polymerization 100, degree of saponification 98 mol%, the amount of a structural unit represented by the formula (2-1) ($R^{17}$ is a methylene group and $X^{17}$ is a hydrogen atom) 0.01 mol%) was used and 62.99 g of butyraldehyde was added instead of acetaldehyde.

(Production Example 27)

A polyvinyl acetal resin B11 was obtained as in Production Example 1 except that a carboxylic acid-modified polyvinyl alcohol resin (average degree of polymerization 500, degree of saponification 98 mol%, the amount of a structural unit represented by the formula (2-1) ($R^{17}$ is a methylene group and $X^{17}$ is a hydrogen atom) 0.01 mol%) was used and 82.99 g of butyraldehyde was added instead of acetaldehyde.

[Table 1]

| | | Raw material PVA | | | | Aldehyde type | Polyvinyl acetal resin | | | | | | | |
|---|---|---|---|---|---|---|---|---|---|---|---|---|---|---|
| | | Type | Degree of saponification (mol%) | Amount of structural unit containing acidic functional group (mol%) | Mixing ratio (weight ratio) | | Average degree of polymerization | Hydroxy group content (mol%) | Acetal group content (mol%) | Acetyl group content (mol%) | Amount of structural unit containing acidic functional group | | Bronsted acid content (mg/g) | Tg (°C) |
| | | | | | | | | | | | Type | Amount (mol%) | | |
| Production Example 1 | Polyvinyl acetal resin A1 | Carboxylic acid-modified PVA | 98 | 0.01 | - | Acetaldehyde | 150 | 40.0 | 57.99 | 20 | Carboxylic acid group | 0.01 | 0.2 | 93 |
| Production Example 2 | Polyvinyl acetal resin A2 | Sulfonic acid-modified PVA | 98 | 1.0 | - | Acetaldehyde | 500 | 700 | 2700 | 20 | Sulfonic acid group | 1.0 | 19.2 | 83 |
| Production Example 3 | Polyvinyl acetal resin A3 | Phosphoric acid-modified PVA | 92 | 100 | - | Acetaldehyde | 1000 | 500 | 3200 | 80 | Phosphoric acid group | 100 | 169 | 85 |
| Production Example 4 | Polyvinyl acetal resin A4 | Phosphoric acid-modified PVA | 98 | 0.1 | - | Acetaldehyde | 1250 | 80.0 | 17.9 | 20 | Phosphoric acid group | 0.1 | 2.3 | 82 |
| Production Example 5 | Polyvinyl acetal resin A5 | Sulfonic acid-modified PVA | 98 | 100 | - | Acetaldehyde | 1500 | 40.0 | 48.0 | 20 | Sulfonic acid group | 100 | 169 | 94 |
| Production Example 6 | Polyvinyl acetal resin A6 | Carboxylic acid-modified PVA | 98 | 1.0 | 50:50 | Acetaldehyde | 500 | 500 | 47.5 | 20 | Carboxylic acid group | 0.50 | 11.5 | 85 |
| | | Unmodified PVA | 98 | 0 | | | | | | | | | | |

(continued)

| | | Raw material PVA | | | | Aldehyde type | Polyvinyl acetal resin | | | | | | | |
|---|---|---|---|---|---|---|---|---|---|---|---|---|---|---|
| | | Type | Degree of saponification (mol%) | Amount of structural unit containing acidic functional group (mol%) | Mixing ratio (weight ratio) | | Average degree of polymerization | Hydroxy group content (mol%) | Acetal group content (mol%) | Acetyl group content (mol%) | Amount of structural unit containing acidic functional group | | Bronsted acid content (mg/g) | Tg (°C) |
| | | | | | | | | | | | Type | Amount (mol%) | | |
| Production Example 7 | Polyvinyl acetal resin A7 | Carboxylic acid-modified PVA | 92 | 0.1 | 50:50 | Acetaldehyde | 1000 | 700 | 21.9 | 80 | Carboxylic acid group | 0.05 | 2.3 | 83 |
| | | Sulfonic acid-modified PVA | 92 | 0.1 | | | | | | | Sulfonic acid group | 0.05 | | |
| Production Example 8 | Polyvinyl acetal resin A8 | Carboxylic acid-modified PVA | 98 | 0.01 | 50:50 | Acetaldehyde | 1250 | 60.0 | 37.945 | 20 | Carboxylic acid group | 0.005 | 1.25 | 80 |
| | | Phosphoric acid-modified PVA | 98 | 0.1 | | | | | | | Phosphoric acid group | 0.05 | | |
| Production Example 9 | Polyvinyl acetal resin A9 | Carboxylic acid-modified PVA | 98 | 150 | - | Acetaldehyde | 1250 | 500 | 33.0 | 20 | Carboxylic acid group | 150 | 252 | 84 |
| Production Example 10 | Polyvinyl acetal resin B1 | Carboxylic acid-modified PVA | 98 | 0.1 | - | Acetaldehyde | 100 | 45.0 | 52.9 | 20 | Carboxylic acid group | 0.1 | 2.3 | 86 |
| Production Example 11 | Polyvinyl acetal resin B2 | Sulfonic acid-modified PVA | 98 | 100 | - | Acetaldehyde | 1700 | 40.0 | 48.0 | 20 | Sulfonic acid group | 100 | 169 | 85 |
| Production Example 12 | Polyvinyl acetal resin B3 | Phosphoric acid-modified PVA | 98 | 1.0 | - | Acetaldehyde | 500 | 350 | 62.0 | 20 | Phosphoric acid group | 1.0 | 19.2 | 95 |

(continued)

| | | Raw material PVA | | | | Aldehyde type | Polyvinyl acetal resin | | | | | | | |
|---|---|---|---|---|---|---|---|---|---|---|---|---|---|---|
| | | Type | Degree of saponification (mol%) | Amount of structural unit containing acidic functional group (mol%) | Mixing ratio (weight ratio) | | Average degree of polymerization | Hydroxy group content (mol%) | Acetal group content (mol%) | Acetyl group content (mol%) | Amount of structural unit containing acidic functional group | | Bronsted acid content (mg/g) | Tg (°C) |
| | | | | | | | | | | | Type | Amount (mol%) | | |
| Production Example 13 | Polyvinyl acetal resin B4 | Carboxylic acid-modified PVA | 98 | 0.01 | - | Acetaldehyde | 1250 | 85.0 | 12.99 | 20 | Carboxylic acid group | 0.01 | 0.2 | 78 |
| Production Example 14 | Polyvinyl acetal resin B5 | Unmodified PVA | 92 | 0 | - | Acetaldehyde | 500 | 60.0 | 320 | 8.0 | - | 0 | 0 | 80 |
| Production Example 15 | Polyvinyl acetal resin B6 | Carboxylic acid-modified PVA | 98 | 0.01 | - | Acetaldehyde | 1700 | 40.0 | 57.99 | 20 | Carboxylic acid group | 0.01 | 0.2 | 94 |
| Production Example 16 | Polyvinyl acetal resin B7 | Carboxylic acid-modified PVA | 98 | 0.01 | - | Acetaldehyde | 150 | 35.0 | 62.99 | 20 | Carboxylic acid group | 0.01 | 0.2 | 94 |
| Production Example 17 | Polyvinyl acetal resin A10 | Sulfonic acid-modified PVA | 98 | 1.0 | - | Butyraldehyde | 500 | 40.0 | 57.0 | 20 | Sulfonic acid group | 1.0 | 19.2 | 75 |
| Production Example 18 | Polyvinyl acetal resin A11 | Carboxylic acid-modified PVA | 98 | 0.1 | - | Butyraldehyde | 150 | 500 | 47.9 | 20 | Sulfonic acid group | 0.1 | 23 | 78 |
| Production Example 19 | Polyvinyl acetal resin A12 | Carboxylic acid-modified PVA | 98 | 0.1 | - | Hexyl aldehyde | 500 | 500 | 47.9 | 20 | Carboxylic acid group | 0.1 | 23 | 64 |
| Production Example 20 | Polyvinyl acetal resin A13 | Carboxylic acid-modified PVA | 98 | 0.005 | - | Butyraldehyde | 500 | 40.0 | 57.995 | 20 | Carboxylic acid group | 0.005 | 0.15 | 74 |

(continued)

| | | Raw material PVA | | | | Aldehyde type | Polyvinyl acetal resin | | | | | | | |
|---|---|---|---|---|---|---|---|---|---|---|---|---|---|---|
| | | Type | Degree of saponification (mol%) | Amount of structural unit containing acidic functional group (mol%) | Mixing ratio (weight ratio) | | Average degree of polymerization | Hydroxy group content (mol%) | Acetal group content (mol%) | Acetyl group content (mol%) | Amount of structural unit containing acidic functional group | | Bronsted acid content (mg/g) | Tg (°C) |
| | | | | | | | | | | | Type | Amount (mol%) | | |
| Production Example 21 | Polyvinyl acetal resin A14 | Carboxylic acid-modified PVA | 98 | 0.001 | - | Butyraldehyde | 500 | 40.0 | 57.999 | 20 | Carboxylic acid group | 0.001 | 0.05 | 73 |
| Production Example 22 | Polyvinyl acetal resin A15 | Carboxylic acid-modified PVA | 98 | 145 | - | Butyraldehyde | 500 | 40.0 | 43.5 | 20 | Carboxylic acid group | 14.5 | 250 | 77 |
| Production Example 23 | Polyvinyl acetal resin A16 | Phosphoric acid-modified PVA | 98 | 1.0 | - | Butyraldehyde | 500 | 40.0 | 57.0 | 20 | Phosphoric acid group | 1.0 | 19.2 | 76 |
| Production Example 24 | Polyvinyl acetal resin B8 | Unmodified PVA | 98 | 0.0 | - | Butyraldehyde | 150 | 40.0 | 58.0 | 2.0 | - | 0.0 | 0 | 72 |
| Production Example 25 | Polyvinyl acetal resin B9 | Carboxylic acid-modified PVA | 98 | 0.01 | - | Butyraldehyde | 150 | 85.0 | 12.99 | 20 | Carboxylic acid group | 0.01 | 0.2 | 81 |
| Production Example 26 | Polyvinyl acetal resin B10 | Carboxylic acid-modified PVA | 98 | 0.01 | - | Butyraldehyde | 100 | 40.0 | 57.99 | 20 | Carboxylic acid group | 0.01 | 0.2 | 72 |
| Production Example 27 | Polyvinyl acetal resin B11 | Carboxylic acid-modified PVA | 98 | 0.01 | - | Butyraldehyde | 500 | 350 | 62.99 | 20 | Carboxylic acid group | 0.01 | 0.2 | 67 |

(Examples 1 to 23 and Comparative Examples 1 to 15)

A polyvinyl acetal resin, a fibrous carbon material, and a non-aqueous solvent were mixed in accordance with the formulation shown in Table 2 to prepare a resin composition.
The following non-aqueous solvent, carbon materials, and resins were used.

<Non-aqueous solvent>

N-methylpyrrolidone

<Carbon material>

MW-1: Multi-walled carbon nanotube (produced by Sigma-Aldrich, average fiber diameter 9 nm, average fiber length 13 um, specific gravity 1.8, specific surface area 200 $m^2/g$, G/D ratio 8.0)
MW-2: Multi-walled carbon nanotube (produced by Cnano Technology, average fiber diameter 10 nm, average fiber length 150 um, specific gravity 1.9, specific surface area 3,000 $m^2/g$, G/D ratio 20)
MW-3: Multi-walled carbon nanotube (produced by Cnano Technology, average fiber diameter 10 nm, average fiber length 15 um, specific gravity 1.8, specific surface area 250 $m^2/g$, G/D ratio 20)
VGCF: Vapor-grown carbon fiber (produced by Showa Denko K.K., average fiber diameter 150 nm, average fiber length 15 um, specific gravity 2.1, specific surface area 13 $m^2/g$, G/D ratio 5.5)
SW-1: Single-walled carbon nanotube (produced by OCSIAL, average fiber diameter 1.2 $\pm$ 0.5 nm, average fiber length 4 um or greater, specific gravity 1.3, G/D ratio 80)
AB: Particulate acetylene black (produced by Denka Company Limited., average particle size 35 nm, specific surface area 68 $m^2/g$, G/D ratio 1.27)

<Resin>

PVDF: Polyvinylidene fluoride (produced by Kureha Corporation, weight average molecular weight 630,000)
PVP: Polyvinylpyrrolidone (produced by Tokyo Chemical Industry Co., Ltd., weight average molecular weight 40,000)

<Evaluation>

The resin compositions obtained in the examples and the comparative examples were evaluated as follows. Table 2 shows the results.

(1) Average surface roughness (dispersibility)

The obtained resin composition was applied to a release-treated polyethylene terephthalate (PET) film to a dried thickness of 20 um, dried, and separated from the PET film. A sheet was thus prepared.
The average surface roughness Ra of the obtained sheet was measured in conformity with JIS B 0601 (1994) and evaluated based on the following criteria.

∘ (Good): An Ra of less than 5 um
Δ (Fair): An Ra of 5 um or greater and less than 8 um
× (Poor): An Ra of 8 or greater

A low average surface roughness Ra indicates excellent smoothness and excellent dispersibility.

(2) Adhesion

The obtained resin composition was applied to aluminum foil (thickness 20 um) to a dried thickness of 20 um and dried to form a specimen including a sheet of the resin composition on the aluminum foil.
This specimen was cut to a size of 1 cm in length and 2 cm in width. With AUTOGRAPH (produced by Shimadzu Corporation, "AGS-J"), the sheet was pulled up while the specimen was fixed, and the peeling force (N) necessary to

completely separate the sheet from the aluminum foil was measured. The peeling force (N) was then evaluated based on the following criteria.

◦ (Good): A peeling force of 8.0 N or greater
Δ (Fair): A peeling force of 5.0 N or greater and less than 8.0 N
× (Poor): A peeling force of less than 5.0 N

(3) Application properties

The obtained resin composition was applied to a glass plate with a doctor blade and dried in an air circulating oven at 150°C for five minutes to prepare a coating film. The obtained coating film was visually observed and evaluated based on the following criteria.

◦ (Good): No fracture or crack was observed on the coating film surface, and the film thickness was uniform.
Δ (Fair): Slight fractures or cracks were observed on the coating film surface.
× (Poor): Fractures or cracks were observed on the coating film surface, and the film thickness varied.

(4) Increase in viscosity (dispersion stability)

The viscosity of the obtained resin composition (10 parts by weight) was measured using a rheometer (produced by REOLOGICA Instruments, parallel plates with a diameter of 10 mm were used) at a shear rate of 0.1 to 1,000 $s^{-1}$. The viscosity at a shear rate 1 $s^{-1}$ was taken as the paste viscosity of the sample. The measurement temperature was 20°C.
The viscosity after the sample was left to stand at 20°C for one week was also measured. The viscosity increase rate was calculated using the following formula from the viscosity immediately after preparation and the viscosity after one week, and evaluated based on the following criteria.

$$\text{Viscosity increase rate (\%)} = (\text{Viscosity after one week/Viscosity immediately after production}) \times 100$$

◦ (Good): A viscosity increase rate of 150% or less
Δ (Fair): A viscosity increase rate of greater than 1500 and 300% or less
× (Poor): A viscosity increase rate of greater than 300%

A low viscosity increase rate indicates excellent dispersion stability.

(5) Electrical conductivity

The obtained resin composition was applied to a release-treated polyethylene terephthalate (PET) film to a dried thickness of 20 um, dried, and separated from the PET film. A sheet was thus prepared.
The electrode resistance of the obtained sheet was measured using an electrode resistance meter (produced by Hioki E.E. Corporation) and evaluated based on the following criteria.

◦ (Good): An electrode resistance value of less than 100 Ω/sq
Δ (Fair): An electrode resistance value of 100 Ω/sq or greater and less than 200 Ω/sq
× (Poor): An electrode resistance value of greater than 200 Ω/sq

A low surface resistance value indicates excellent electron conductivity.

(6) Direct current resistance

To the obtained resin composition were added 10 g of NCM622 ($LiNi_{0.6}Co_{0.2}Mn_{0.2}O_2$) as a positive electrode active material and 0.2 g of PVDF#7200 (polyvinylidene fluoride, produced by Kureha Corporation), whereby a positive electrode composition was obtained. The obtained positive electrode composition was applied to aluminum foil (thickness 20 um) and dried to give a positive electrode sheet having a dried thickness of 80 um. A piece (φ 11 mm) was punched out from this positive electrode sheet to give a positive electrode layer. Separately, a piece (φ 11 mm) was punched out from metal lithium foil having a thickness of 100 um to give a negative electrode layer. A solvent mixture (EC:DEC:EMC = 3:4:3) containing 1 mol/L of $LiPF_6$ was used as an electrolyte solution. A positive electrode collector, the positive

electrode layer, a porous PP membrane separator (thickness 25 pm), and the metal lithium foil (negative electrode layer) were stacked in this order. They were compressed using a crimper to prepare a sealed coin cell. The direct current resistance of the obtained coin cell was measured using a charge/discharge tester (produced by Hokuto Denko Corp.).

The voltage was measured at applied currents of 0.2 C, 1.0 C, 8.0 C, and 16.0 C. The direct current resistance value was calculated using Ohm's law and evaluated based on the following criteria.

◦ (Good): A direct current resistance value of 8 Q or less
Δ (Fair): A direct current resistance value of greater than 8 Q and 15 Q or less
× (Poor): A direct current resistance value of greater than 15 Q

(7) Capacity retention

The capacity retention of the obtained coin cell was measured using a charge/discharge measuring device (produced by Hohsen Corp.). The capacity retention was measured in the voltage range from 0.1 to 1.5 V at an evaluation temperature of 25°C. The percentage of the capacity at the 100th cycle relative to the discharge capacity at the 5th cycle was calculated as the capacity retention (%) and evaluated based on the following criteria.

◦ (Good): A capacity retention of 90% or greater
Δ (Fair): A capacity retention of 70 or greater and less than 90%
× (Poor): A capacity retention of less than 70%

[Table 2]

| | Non-aqueous carbon matenal composition | | | | | | | Evaluation | | | | | | | | | | | | |
|---|---|---|---|---|---|---|---|---|---|---|---|---|---|---|---|---|---|---|---|---|
| | Carbon matenal | | | | Polyvinyl acetal resin | | Non-aqueous solvent (9) | Surface roughness (μm) | | Adhesion (N) | | Application properties | Increase in viscosity (%) | | Electrical conductivity (Ω/sq) | | Direct current resistance (Ω) | | Capacity retention (%) | |
| | Type | Amount (9) | Type | Amount (9) | Type | Amount (9) | | | | | | | | | | | | | | |
| Example 1 | MW-1 | 10 | - | - | A1 | 2 | 188 | 3,1 | ○ | 6,3 | Δ | ○ | 187 | Δ | 95 | Q | 7,94 | ○ | 99 | ○ |
| Example 2 | MW-1 | 10 | - | - | A2 | 5 | 185 | 2,8 | ○ | 72 | Δ | ○ | 134 | ○ | 77 | ○ | 9,59 | Δ | 99 | ○ |
| Example 3 | MW-1 | 10 | - | - | A3 | 10 | 130 | 2.7 | ○ | 12,9 | ○ | ○ | 110 | ○ | 87 | ○ | 5,53 | ○ | 88 | Δ |
| Example 4 | MW-1 | 10 | - | - | A4 | 20 | 70 | 4,5 | ○ | 13,5 | ○ | ○ | 128 | ○ | 145 | Δ | 9,17 | Δ | 96 | ○ |
| Example 5 | MW-2 | 10 | - | - | A5 | 2 | 130 | 3.1 | ○ | 14,6 | ○ | ○ | 127 | ○ | 82 | ○ | 6,21 | ○ | 93 | ○ |
| Example 6 | MW-1 | 10 | - | - | A6 | 5 | 135 | 4,2 | ○ | 11,1 | ○ | ○ | 126 | ○ | 82 | ○ | 4,99 | ○ | 98 | ○ |
| Example 7 | MW-1 | 10 | - | - | A7 | 10 | 130 | 3,1 | ○ | 11,3 | ○ | ○ | 148 | ○ | 90 | ○ | 9,52 | Δ | 94 | ○ |
| Example 8 | MW-1 | 10 | - | - | A8 | 20 | 170 | 4,4 | ○ | 12,5 | ○ | ○ | 142 | ○ | 151 | Δ | 9,83 | Δ | 91 | ○ |
| Example 9 | MW-1 | 10 | - | - | A9 | 2 | 200 | 4.5 | ○ | 8,6 | ○ | Δ | 204 | Δ | 76 | ○ | 4,14 | ○ | 98 | ○ |
| Example 10 | MW-2 | 10 | - | - | A2 | 2 | 288 | 4,1 | ○ | 12,9 | ○ | ○ | 125 | ○ | 100 | Δ | 5.96 | ○ | 88 | Δ |
| Example 11 | MW-3 | 10 | - | - | A3 | 2 | 388 | 3,1 | ○ | 13,4 | ○ | ○ | 149 | ○ | 71 | ○ | 6,09 | ○ | 99 | ○ |
| Example 12 | VGCF | 10 | - | - | A1 | 2 | 138 | 3,9 | ○ | 9,9 | ○ | ○ | 141 | ○ | 86 | ○ | 8,02 | Δ | 89 | Δ |
| Example 13 | SW-1 | 10 | - | - | A6 | 5 | 585 | 3,9 | ○ | 15,0 | ○ | ○ | 112 | ○ | 83 | ○ | 6,29 | ○ | 89 | Δ |
| Example 14 | MW-1 | 3 | AB | 7 | A1 | 2 | 88 | 4,9 | ○ | 10,0 | ○ | ○ | 126 | ○ | 91 | ○ | 9,26 | Δ | 95 | ○ |
| Example 15 | SW-1 | 1 | AB | 9 | A4 | 10 | 130 | 4,3 | ○ | 12,3 | ○ | ○ | 149 | ○ | 86 | ○ | 5,21 | ○ | 99 | ○ |
| Example 16 | MW-3 | 7 | SW-1 | 3 | A3 | 5 | 1290 | 6.4 | Δ | 13,9 | ○ | ○ | 125 | ○ | 79 | ○ | 5,12 | ○ | 97 | ○ |
| Example 17 | MW-1 | 10 | - | - | A10 | 2 | 188 | 4,4 | ○ | 12,8 | ○ | ○ | 124 | ○ | 56 | ○ | 8,83 | Δ | 93 | ○ |
| Example 18 | MW-2 | 10 | - | - | A11 | 2 | 188 | 3.6 | ○ | 15,1 | ○ | ○ | 142 | ○ | 75 | ○ | 7,98 | ○ | 93 | ○ |
| Example 19 | MW-3 | 10 | - | - | A12 | 2 | 188 | 5,8 | Δ | 13,9 | ○ | ○ | 115 | ○ | 78 | ○ | 5,82 | ○ | 92 | ○ |
| Example 20 | MW-4 | 10 | - | - | A13 | 2 | 188 | 4,1 | ○ | 11,9 | ○ | ○ | 109 | ○ | 79 | ○ | 6,99 | ○ | 90 | ○ |
| Example 21 | MW-5 | 10 | - | - | A14 | 2 | 188 | 4,8 | ○ | 12,1 | ○ | ○ | 100 | o | 89 | ○ | 5,93 | ○ | 98 | ○ |
| Example 22 | MW-6 | 10 | - | - | A15 | 2 | 188 | 4,3 | ○ | 13,1 | ○ | ○ | 110 | ○ | 81 | ○ | 9,34 | Δ | 92 | ○ |

(continued)

| | Non-aqueous carbon matenal composition | | | | | | | Evaluation | | | | | | | | | | | | | |
|---|---|---|---|---|---|---|---|---|---|---|---|---|---|---|---|---|---|---|---|---|---|
| | Carbon matenal | | | | Polyvinyl acetal resin | | Non-aqueous solvent (9) | Surface roughness (μm) | | Adhesion (N) | | Application properties | Increase in viscosity (%) | | Electrical conductivity (Ω/sq) | | Direct current resistance (Ω) | | Capacity retention (%) | |
| | Type | Amount (9) | Type | Amount (9) | Type | Amount (9) | | | | | | | | | | | | | | |
| Example 23 | MW-7 | 10 | - | - | A16 | 2 | 188 | 2,9 | ○ | 9,4 | ○ | ○ | 129 | ○ | 69 | ○ | 9,16 | Δ | 99 | ○ |
| Comparative Example 1 | MW-1 | 10 | - | - | B1 | 2 | 188 | 4,6 | ○ | 2,1 | × | ○ | 153 | Δ | 278 | × | 28,33 | × | 59 | × |
| Comparative Example 2 | MW-1 | 10 | - | - | B2 | 2 | 188 | 11,2 | × | 15,5 | ○ | ○ | 124 | ○ | 291 | × | 13,63 | Δ | 67 | × |
| Comparative Example 3 | MW-1 | 10 | - | - | 83 | 2 | 188 | 3,4 | | 9,5 | ○ | ○ | 349 | × | 82 | ○ | 9,59 | Δ | 75 | Δ |
| Comparative Example 4 | MW-1 | 10 | - | - | 84 | 5 | 185 | 9,7 | x | 9,9 | ○ | ○ | 132 | ○ | 84 | ○ | 12,95 | Δ | 57 | × |
| Comparative Example 5 | MW-1 | 10 | - | - | 85 | 2 | 188 | 3 | ○ | 10,4 | ○ | × | 133 | ○ | 278 | × | 13,16 | Δ | 84 | Δ |
| Comparative Example 6 | MW-1 | 10 | - | - | B6 | 2 | 188 | 8,7 | × | 16,4 | ○ | ○ | 121 | ○ | 242 | × | 4,57 | ○ | 63 | × |
| Comparative Example 7 | MW-1 | 10 | - | - | B7 | 2 | 188 | 3,1 | ○ | 5,6 | Δ | ○ | 411 | × | 93 | ○ | 25,06 | × | 50 | × |
| Comparative Example 8 | MW-1 | 10 | - | - | - | 0 | 190 | 8,2 | × | 1,8 | × | × | 326 | × | 88 | ○ | 13,46 | Δ | 54 | × |

(continued)

| | Non-aqueous carbon matenal composition | | | | | | | Evaluation | | | | | | | | | | | | | |
|---|---|---|---|---|---|---|---|---|---|---|---|---|---|---|---|---|---|---|---|---|---|
| | Carbon matenal | | | | Polyvinyl acetal resin | | Non-aqueous solvent (9) | Surface roughness (μm) | | Adhesion (N) | | Application properties | Increase in viscosity (%) | | Electrical conductivity (Ω/sq) | | Direct current resistance (Ω) | | Capacity retention (%) | |
| | Type | Amount (9) | Type | Amount (9) | Type | Amount (9) | | | | | | | | | | | | | | |
| Comparative Example 9 | AB | 10 | - - | - - | A2 | 2 | 38 | 4,3 | ○ | 14,3 | ○ | ○ | 139 | ○ | 220 | × | 25.66 25,66 | × | 43 | × |
| Comparative Example 10 | MW-1 | 10 | - | - | PVDF | 2 | 88 | 9,7 | × | 7.8 | Δ | ○ | 138 | ○ | 84 | ○ | 7,29 | ○ | 95 | ○ |
| Comparative Example 11 | MW-1 | 10 | - | - | PVP | 5 | 185 | 2,9 | ○ | 3,4 | × | ○ | 363 | × | 97 | ○ | 4,58 | ○ | 83 | Δ |
| Comparative Example 12 | MW-1 | 10 | - | - | B8 | 2 | 188 | 4,5 | ○ | 6,8 | Δ | ○ | 132 | ○ | 154 | Δ | 14,26 | Δ | 41 | × |
| Comparative Example 13 | MW-1 | 10 | - | - | 89 | 2 | 188 | 3,7 | ○ | 9,2 | ○ | Δ | 322 | × | 97 | ○ | 29,74 | × | 48 | × |
| Comparative Example 14 | MW-1 | 10 | - | - | B10 | 2 | 188 | 4,1 | ○ | 5.8 | Δ | ○ | 164 | Δ | 89 | ○ | 11,63 | Δ | 42 | × |
| Comparative Example 15 | MW-1 | 10 | - | - | B11 | 2 | 188 | 4,5 | ○ | 11,2 | ○ | ○ | 113 | ○ | 88 | ○ | 17,89 | × | 52 | × |

INDUSTRIAL APPLICABILITY

The present invention can provide a resin composition that has excellent application properties and excellent adhesion, can achieve high electron conductivity simultaneously with the dispersibility and dispersion stability of fibrous carbon materials, and enables production of lithium secondary batteries having high capacity retention.

## Claims

**1.** A resin composition comprising:

a fibrous carbon material;
a non-aqueous solvent; and
a polyvinyl acetal resin,
the polyvinyl acetal resin including a structural unit containing an acidic functional group, and having an average degree of polymerization of 150 or greater and 1,500 or less and a hydroxy group content of 40.0 mol% or greater and 80.0 mol% or less.

**2.** The resin composition according to claim 1,
wherein the acidic functional group is at least one selected from the group consisting of a carboxylic acid group, a sulfonic acid group, and a phosphoric acid group.

**3.** The resin composition according to claim 1 or 2,
wherein the structural unit containing an acidic functional group is contained in an amount of 0.01 mol% or greater and 20.0 mol% or less relative to all structural units of the polyvinyl acetal resin.

**4.** The resin composition according to any one of claims 1 to 3,
wherein the acidic functional group is a Bronsted acidic group, and the polyvinyl acetal resin has a Bronsted acid content of 0.1 mg/g or greater and 200 mg/g or less.

**5.** The resin composition according to any one of claims 1 to 4,
wherein the fibrous carbon material is a carbon nanotube.

## INTERNATIONAL SEARCH REPORT

International application No.
**PCT/JP2022/013574**

**A. CLASSIFICATION OF SUBJECT MATTER**

***C08K 7/06***(2006.01)i; ***C08L 29/14***(2006.01)i; ***H01M 4/62***(2006.01)i; ***C08K 3/04***(2006.01)i
FI: C08L29/14; C08K3/04; C08K7/06; H01M4/62 Z

According to International Patent Classification (IPC) or to both national classification and IPC

**B. FIELDS SEARCHED**

Minimum documentation searched (classification system followed by classification symbols)

C08L29; H01M4; C08F16; C08F8

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2016-76485 A (SEKISUI CHEMICAL CO LTD) 12 May 2016 (2016-05-12) claims, paragraphs [0001], [0015], example 3 | 1-5 |
| Y | WO 2017/170898 A1 (SEKISUI CHEMICAL CO LTD) 05 October 2017 (2017-10-05) claims, paragraph [0016], examples | 1-5 |
| Y | JP 2012-22888 A (HITACHI LTD) 02 February 2012 (2012-02-02) paragraphs [0039]-[0054], [0062], fig. 2-3 | 1-5 |
| Y | JP 2009-170410 A (SAMSUNG ELECTRONICS CO., LTD.) 30 July 2009 (2009-07-30) paragraph [0011] | 1-5 |
| Y | JP 2012-221672 A (HITACHI CHEM CO LTD) 12 November 2012 (2012-11-12) claims, paragraph [0014] | 1-5 |
| Y | JP 2011-70908 A (MIKUNI COLOR LTD) 07 April 2011 (2011-04-07) claims, examples | 1-5 |
| A | WO 2018/079200 A1 (SEKISUI CHEMICAL CO LTD) 03 May 2018 (2018-05-03) entire text | 1-5 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 May 2022** | **14 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | Telephone No. |

Form PCT/ISA/210 (second sheet) (January 2015)

**INTERNATIONAL SEARCH REPORT**
**Information on patent family members**

International application No.
**PCT/JP2022/013574**

| Patent document cited in search report | Publication date (day/month/year) | Patent family member(s) | Publication date (day/month/year) |
|---|---|---|---|
| JP 2016-76485 A | 12 May 2016 | (Family: none) | |
| WO 2017/170898 A1 | 05 October 2017 | US 2019/0074517 A1<br>claims, paragraph [0026], examples<br>EP 3439088 A1<br>CN 108028387 A<br>KR 10-2018-0129756 A<br>TW 201739096 A | |
| JP 2012-22888 A | 02 February 2012 | (Family: none) | |
| JP 2009-170410 A | 30 July 2009 | US 2009/0181309 A1<br>paragraph [0020]<br>EP 2081244 A1<br>KR 10-2009-0078656 A<br>CN 101488567 A | |
| JP 2012-221672 A | 12 November 2012 | (Family: none) | |
| JP 2011-70908 A | 07 April 2011 | (Family: none) | |
| WO 2018/079200 A1 | 03 May 2018 | CN 108780895 A<br>KR 10-2019-0075863 A<br>TW 201822395 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014028900 A
- JP 2014181140 A
- JP 2014209435 A